# EUROPEAN PATENT APPLICATION

(11) **EP 4 475 310 A1**
(43) Date of publication of application: **11.12.2024**
(21) Application number: 22961687.5
(22) Date of filing: 11.10.2022
(51) Int. Cl.: H01M 50/291

(54) **BATTERY CELL, BATTERY AND ELECTRIC DEVICE**

(71) Applicant: Contemporary Amperex Technology (Hong Kong) Limited, Central, Central And Western District (HK)
(72) Inventor: SU, Huasheng, Ningde, Fujian 352100 (CN); DU, Xianglong, Ningde, Fujian 352100 (CN); XING, Chengyou, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2022/124713
(87) International publication number: WO 2024/077494

(57) **Abstract**

Provided in the present application are a battery cell, a battery and an electric device. The battery cell comprises a casing, an electrode assembly and a protective member, wherein the electrode assembly is accommodated in the casing, and comprises a body portion and a first tab protruding from an end face of the body portion. The protective member is arranged in the casing and covers at least part of the end face, the protective member is provided with a first through hole, and at least part of the first tab is accommodated in the first through hole. In the embodiments of the present application, the protective member is arranged on the end face, such that during the flattening of the first tab part, the number of metal particles falling onto the end face and the number of metal particles entering inside the body portion can be reduced, thereby reducing the risk of short-circuit problems of the battery cell, and improving the usage safety of the battery cell.

## Description

### TECHNICAL FIELD

The application relates to the field of battery technology, and in particular to a battery cell, a battery and an electric device.

### BACKGROUND

Battery cells are widely used in electronic equipment such as mobile phones, laptop computers, electric bicycles, electric automobiles, electric aircrafts, electric ships, electric toy cars, electric toy ships, electric toy planes, and electric tools etc. Battery cells may include nickel-cadmium battery cells, nickel-hydrogen battery cells, lithium-ion battery cells, secondary alkaline zinc-manganese battery cells etc.

In development of the battery technology, how to enhance safety of the battery cells is a technical problem demanding prompt solution in the battery technology.

### SUMMARY

The application provides a battery cell, a battery and an electric device, which can enhance safety.

In an aspect, the embodiments of the application provide a battery cell including a housing, an electrode assembly and a protection member. The electrode assembly is accommodated in the housing. The electrode assembly includes a body portion and a first electrode tab protruding from an end surface of the body portion. The protection member is disposed in the housing and covers at least a part of the end surface, the protection member is provided with a first through hole, and at least a part of the first electrode tab is accommodated in the first through hole.

In the aforesaid solution, by providing a protection member on the end surface, it is possible to reduce the amount of metal particles falling onto the end surface, reduce the amount of metal particles entering the interior of the body portion, reduce the risk of short circuit of the battery cell, and improve the use safety of the battery cell during the flattening process of the first electrode tab portion.

In some embodiments, the protection member includes a base plate and an electrode tab limit portion, the base plate abuts with the end surface, and the first through hole penetrates the base plate; the electrode tab limit portion protrudes from a surface of the base plate and is arranged around the first through hole.

In the aforesaid solution, the protection member includes a base plate and an electrode tab limit portion respectively, and the base plate mainly functions to reduce the amount of metal particles falling onto the end surface so as to improve the safety performance of the battery. The electrode tab limit portion mainly functions to limit the thickness of the first electrode tab portion so as to ensure that the structure of the electrode assembly is reliable.

In some embodiments, the electrode tab limit portion includes a reinforcement rib arranged annularly around the first through hole.

In the aforesaid solution, the reinforcement rib is arranged around the first through hole, so that all the structure of the protection member around the first through hole can have a certain deformation resistance so as to reduce the risk of the protection member deforming while preventing the thickness of the first electrode tab portion from being too small.

In some embodiments, the electrode tab limit portion protrudes from a surface of the base plate away from the end surface.

In the aforesaid solution, the electrode tab limit portion is located on a side of the base plate away from the end surface. This design allows all the structure at various positions in the base plate to contact with the end surface, so as to improve the reliability of coordination between the protection member and the electrode assembly.

In some embodiments, the electrode assembly includes a second electrode tab portion protruding from the end surface, the protection member is provided with a second through hole, and at least a part of the second electrode tab portion is accommodated in the second through hole.

In the aforesaid solution, since both the first electrode tab portion and the second electrode tab portion are disposed on the end surface, a single protection member can simultaneously block the metal particles resulting from the first electrode tab portion and the metal particles resulting from the second electrode tab portion, so as to further reduce the risk of short circuit in the electrode assembly and improve safety.

In some embodiments, a polarity of the first electrode tab portion is opposite to a polarity of the second electrode tab portion.

In the aforesaid solution, the first electrode tab portion and the second electrode tab portion with opposite polarities are both located on the same side of the body portion, which can reduce the occupation of the internal space of the housing by the electrode assembly. At the same time, a single protection member can simultaneously function to block the metal particles generated by the positive and negative electrode tabs, without the need to provide other protection members on the side of the body portion away from the first electrode tab portion, so as to further reduce the overall dimension and weight of the battery cell, which is conducive to meeting the requirement of portability and the like.

In some embodiments, the electrode tab limit portion includes a first limit portion and a second limit portion, the first limit portion is arranged around a peripheral side of the first electrode tab portion, and the second limit portion is arranged around a peripheral side of the second electrode tab portion.

In the aforesaid solution, the electrode tab limit portion includes a first limit portion and a second limit portion, and the first limit portion and the second limit portion limit the thickness of the first electrode tab portion and of the second electrode tab portion respectively. On this basis, it is possible to design the dimension and shape of the first limit portion and of the second limit portion according to the dimension and shape of the first electrode tab portion and of the second electrode tab portion respectively, so as to make them better meet the product requirements and have a relatively high flexibility.

In some embodiments, the first limit portion and the second limit portion are connected to each other to form an integral structure.

In the aforesaid solution, the first limit portion and the second limit portion are both connected to the base plate, and the two are integrally connected. This design can improve the structural strength of the first limit portion and of the second limit portion simultaneously. During use of the battery cell, the impact resistance of the first limit portion and the second limit portion can be improved, the risk of deformation thereof can be reduced, and the service life of the battery cell can be increased.

In some embodiments, the surface of the electrode tab limit portion away from the base plate is recessed to form a recess.

In the aforesaid solution, the electrode tab limit portion is provided with a recess, and the presence of the recess can reduce the influence of the electrode tab limit portion on the pressing process, so that the pressure required during the pressing process can be reduced, so as to reduce the risk of rigid contact of the electrode assembly with other structures, thereby improving the product yield while reducing the preparation difficulty.

In some embodiments, the recess includes a first groove formed by being recessed from a surface of the first limit portion away from the base plate and a second groove formed by being recessed from a surface of the second limit portion away from the base plate, and the first groove is in communication with the second groove.

In the aforesaid solution, the recess is disposed simultaneously in the first limit portion and the second limit portion, that is, a part of the structure in the first limit portion and a part of the structure in the second limit portion are both required to be dug out. This can ensure that the strength of the two is similar, reduce the risk of uneven stress at different positions on the electrode assembly resulting from that one of the first and second limit portions is subjected to too much pressure and the other is subjected to too little pressure during the pressing process. The reliability is improved while the difficulty of preparation of the battery cell is reduced.

In some embodiments, the first limit portion and the second limit portion are arranged to be spaced apart.

In the aforesaid solution, the first limit portion and the second limit portion are two independent structures, which are arranged to be spaced apart in the direction from the first through hole towards the second through hole. The spacer region interposed between the first limit portion and the second limit portion can reduce the strength of the electrode tab limit portions to a certain extent, so as to reduce the pressure required for pressing and reduce the difficulty of preparation of the battery cell.

In some embodiments, a thickness sum of the base plate and the electrode tab limit portion is not greater than a thickness of the first electrode tab portion.

In the aforesaid solution, the thickness sum of the base plate and electrode tab limit portion is designed according to the required thickness of the first electrode tab portion, so as to ensure that the thickness of the flattened first electrode tab portion is always greater than or equal to the thickness sum of the base plate and electrode tab limit portion. Thus, during the process of flattening the first electrode tab portion to the required thickness, the influence of the electrode tab limit portion on the flattening process is reduced. And after the first electrode tab portion is flattened to the required thickness, the electrode tab limit portion can hinder the reduction of the thickness of the first electrode tab portion, so as to ensure that the structure of the flattened first electrode tab portion is reliable.

In some embodiments, a thickness of the base plate is H, and H satisfies: 0.1mm≤H≤1.5mm.

In the aforesaid solution, by set the thickness of the base plate between 0.1mm and 1.5mm, the influence of the base plate on the pressing stress is reduced and the difficulty of preparation of the battery cell is reduced while the structural strength of the base plate is satisfied.

In some embodiments, the base plate is further provided with a plurality of penetration holes spaced apart from each other.

In the aforesaid solution, the penetration holes penetrate the base plate in the thickness direction of the base plate, and the electrolyte solution can be injected through the penetration holes to the position where the electrode assembly is located inside the housing. By disposing the penetration holes, the injection pressure of the electrolyte solution can be reduced, so as to reduce the difficulty of injection, which is conducive to the preparation of the battery cell.

In some embodiments, the surface of the base plate away from the end surface is further provided with a flow guide groove, and at least one end of the flow guide groove penetrates a side wall of the base plate.

In the aforesaid solution, the flow guide groove is used to guide the electrolyte solution and assist in better injecting the electrolyte solution to the position where the electrode assembly is located inside the housing. For example, the flow guide groove may extend in the radial direction of the base plate from the center position of the base plate to the side wall position of the base plate, and penetrate the side wall of the base plate in the thickness direction of the base plate, so as to form a passage for the electrolyte solution to enter the electrode assembly position.

In some embodiments, the protection member is an elastic insulating member.

In the aforesaid solution, the protection member is embodied as an elastic structure, that is, at least a part of the structure in the protection member can deform elastically under a pressure and absorb most of the pressure. In this way, the pressure transmitted to the electrode assembly is reduced, the risk of damage to the electrode assembly is reduced, and the yield of the battery cell is improved.

In a second aspect, the embodiments of the application provide a battery including the battery cell in any of the aforesaid implementations.

In a third aspect, the embodiments of the application provide an electric device including the battery cell in any of the aforesaid implementations used to provide electrical energy.

The above description is only an overview of the technical solution of the application, which, in order to understand the technical means of the application more clearly, can be implemented according to the content of the description, and for better understanding of the above and other objects, features and advantages of the application, the detailed embodiments of the application will be set forth below.

### BRIEF DESCRIPTION OF THE DRAWINGS

In order to illustrate the technical solutions in some embodiments of the application more clearly, the drawings to be used in some embodiments of the application will be briefly described below. Obviously, the drawings described below are merely some embodiments of the application, and it is also possible for a person of ordinary skill in the art to obtain further drawings from these drawings without creative work.
Fig. 1 is a schematic structural view of a vehicle provided by an embodiment of the application;
Fig. 2 is a schematic explosive structural view of a battery provided by an embodiment of the application;
Fig. 3 is a schematic explosive structural view of a battery module provided by an embodiment of the application;
Fig. 4 is a schematic explosive structural view of a battery cell provided by an embodiment of the application;
Fig. 5 is a schematic structural view of an electrode assembly and a protection member in a battery cell provided by an embodiment of the application;
Fig. 6 is a schematic explosive structural view of yet another battery cell provided by an embodiment of the application;
Fig. 7 is a schematic structural view of an electrode assembly and a protection member in yet another battery cell provided by an embodiment of the application;
Fig. 8 is a schematic structural top view of the protection member of Figure 7;
Fig. 9 is a schematic structural view of an electrode assembly and a protection member in yet another battery cell provided by an embodiment of the application;
Fig. 10 is a schematic structural top view of the protection member of Figure 9;
Fig. 11 is a schematic structural view of a protection member in yet another battery cell provided by an embodiment of the application;
Fig. 12 is a schematic sectional structural view at the position of A-A of Fig. 10;
Fig. 13 is a schematic cooperating sectional view of a protection member and an electrode assembly in yet another battery cell provided by an embodiment of the application;
Fig. 14 is a schematic structural view of a protection member in yet another battery cell provided by an embodiment of the application;
Fig. 15 is a schematic structural view of a protection member in yet another battery cell provided by an embodiment of the application.

The views are not necessarily plotted in actual proportion in the drawings.

### LIST OF REFERENCES

1000, vehicle;
100, battery; 200, controller; 300, motor; 400, case; 41, first case portion; 42, second case portion; 43, accommodation portion; 500, battery module;
10, battery cell; 11, housing; 12, electrode assembly; 121, body portion; 122, first electrode tab portion; 123, second electrode tab portion; 13, protection member; 131, base plate; 13 1a, penetration hole; 131b, flow guide groove; 132, electrode tab limit portion; 132a, first limit portion; 132b, second limit portion;
M, end surface;
T1, first through hole; T2, second through hole;
A, recess; A1, first groove; A2, second groove.

### DETAILED DESCRIPTION

In order to make the purpose, the solution and the advantages of some embodiments of the application clearer, the technical solution of some embodiments of the application will be described clearly below with reference to the accompanying drawings in some embodiments of the application. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in some embodiments of the application shown in the drawings are merely illustrative and should not be construed as limiting of the application.

Reference to "a plurality of" in the application means two or more (including two).

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by some embodiments of the application. The battery cell may be in the form of a cylinder, a flat body, a cuboid, or other shape, which is not limited by some embodiments of the application.

The battery cell includes an electrode assembly and electrolyte solution, and the electrode assembly is composed of a positive electrode sheet, a negative electrode sheet and a separator membrane. The battery cell operates mainly by moving metal ions between the positive and negative electrode sheets. The positive electrode sheet includes a positive electrode current collector and a positive electrode active material layer coated on a surface of the positive electrode current collector. The positive electrode current collector which is not coated with the positive electrode active material layer protrudes from the positive electrode current collector which is coated with the positive electrode active material layer. The positive electrode current collector which is not coated with the positive electrode active material layer serves as a positive electrode tab. Taking a lithium ion battery as an example, the material of the positive electrode current collector may be aluminum, and the positive electrode active material may be lithium cobaltate, lithium iron phosphate, lithium ternary or lithium manganate or the like. The negative electrode sheet includes a negative electrode current collector and a negative electrode active material layer coated on a surface of the negative electrode current collector. The negative electrode current collector which is not coated with the negative electrode active material layer protrudes from the negative electrode current collector which is coated with the negative electrode active material layer. The negative electrode current collector which is not coated with the negative electrode active material layer serves as a negative electrode tab. The material of the negative electrode current collector may be copper, and the negative electrode active material may be carbon, silicon or the like. In order to ensure that a large current doe not cause fusing, there are a plurality of positive electrode tabs stacked together, and there are a plurality of negative electrode tabs stacked together. The material of the separator membrane may be PP, PE and the like. In addition, the electrode assembly may be of a wound structure or a laminated structure, which is not limited by the embodiments of the application.

In related technologies, the electrode sheet form an electrode assembly in a way of winding or the like. Taking the wound electrode assembly as an example, the production method of the wound electrode assembly usually involves coating one end of the positive or negative electrode sheet with active material with the other end as a blank portion, and during or after the winding process of the positive and negative electrode sheets, the blank portion is flattened to form an electrode tab, which is then connected to the electrode terminal through an adapter member after being shaped and bent.

The inventors have noticed that after the production of the battery cell, short circuits and other issues are prone to occur, resulting in a decrease in the yield of the battery cell and posing a safety hazard. The inventors have found through research that this is because during the manufacturing process, some metal particles are generated during the flattening of the electrode tab, and some of the metal particles will fall into the separator membrane in the electrode assembly, which is difficult to be removed, so that the problem of short circuit easily occurs to the battery cell during use and affects their use safety.

Based on the above technical problem, the application provides a battery cell, a battery, and an electric device, which, by adding a protection member on an end surface of the electrode assembly, reduce the risk of metal particles falling into the electrode assembly, reduce the risk of short circuit of the battery cell, and improve safety.

The technical solution described by the embodiments of the application is applicable to batteries and electric devices employing batteries. The electric device may be a cellphone, a portable device, a notebook computer, a battery cart, an electric automobile, a steamship, an areospacecraft, an electronic toy, an electric tool and the like. Here the areospacecraft may be an airplane, a rocket, an aerospaceplane, a spaceship and the like, for example. The electric toy includes a fixed or movable electric toy, in particular, for example, a game machine, an electric car toy, an electric ship toy, an electric airplane toy and the like. The electric tool includes a metal cutting power tool, a grinding electric tool, an assembly electric tool, a railway electric tool and the like, in particular, for example, an electric drill, an electric grinder, an electric wrench, an electric screwdriver, an electric hammer, an impact electric drill, a concrete vibrator and an electric planer.

The battery cell described in the embodiments of the application is not limited to the electric devices described above, but for the sake of simplicity, the following embodiments are all illustrated using an electric automobile as an example.

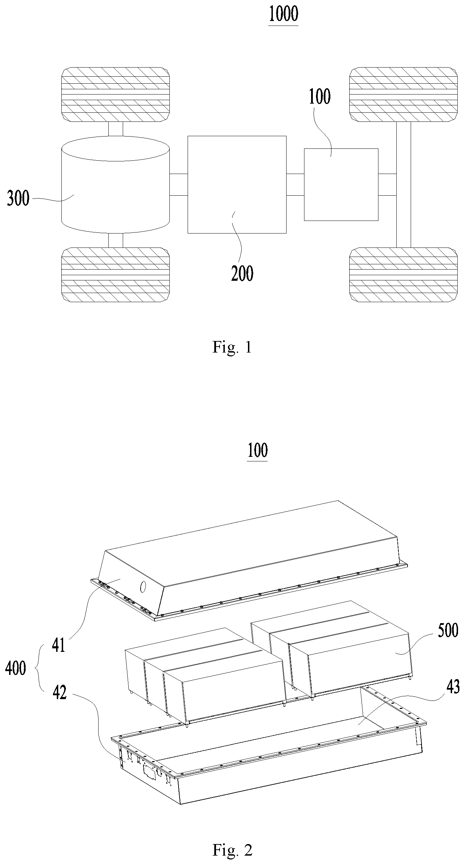

Referring to Fig. 1, Fig. 1 is a simple schematic view of a vehicle 1000 provided by an embodiment of the application. The vehicle 1000 may be an oil automobile, a gas automobile or a a new energy automobile, and the new energy automobile may be a pure electric automobile, a hybrid automobile or an extended range automobile and the like. A battery 100 may be provided inside the vehicle 1000. In particular, for example, the battery 100 may be provided at a bottom or a head or a rear of the vehicle 1000. The battery 100 may be used for powering the vehicle 1000. For example, the battery 100 may serve as an operational power source for the vehicle 1000. The vehicle 1000 may also include a controller 200 and a motor 300. The controller 200 is used for controlling the battery to power the motor 300, for example. The battery may be used for starting, navigation and the like of the vehicle 1000. Of course, the battery 100 may also be used to drive the vehicle 1000 to travel, replacing or partially replacing oil or gas to provide power for the vehicle 1000.

Fig. 2 is a schematic explosive view of a battery provided by some embodiments of the application. As shown in Fig. 2, the battery 100 includes a case 400 and a battery cell (not shown in the figure), and the battery cell is accommodated in the case 400.

The case 400 is used for accommodating the battery cell, and the case 400 may have various structures. In some embodiments, the case 400 may include a first case portion 41 and a second case portion 42 capped by each other. The first case portion 41 and the second case portion 42 together define an accommodation portion 43 for accommodating the battery cell. The second case portion 42 may be of a hollow structure with one end open, the first case portion 41 is of a plate-like structure, and the first case portion 41 is capped to the open side of the second case portion 42 to form the case with the accommodation portion 43. Each of the first case portion 41 and the second case portion 42 may also be of a hollow structure with one side open, and the open side of the first case portion 41 is capped to the open side of the second case portion 42 to form the case 400 with the accommodation portion 43. Of course, the first case portion 41 and the second case portion 42 may have various shapes, such as a cylinder, a cuboid and the like.

In the battery 100, the amount of battery cell may be single or plural. If there are a plurality of battery cells, the plurality of battery cells may be connected in series or in parallel or in a mixed manner, wherein the mixed manner means that the plurality of battery cells are connected both in series and in parallel. The plurality of battery cells may be directly connected together in series or in parallel or in the mixed manner, and the entirety constituted by the plurality of battery cells is accommodated in the case 400. Of course, the plurality of battery cells may also be connected in series or in parallel or in the mixed manner to form battery modules 500 at first, and then a plurality of battery modules 500 may be connected in series or in parallel or in the mixed manner to form an entirety and be accommodated in the case 400.

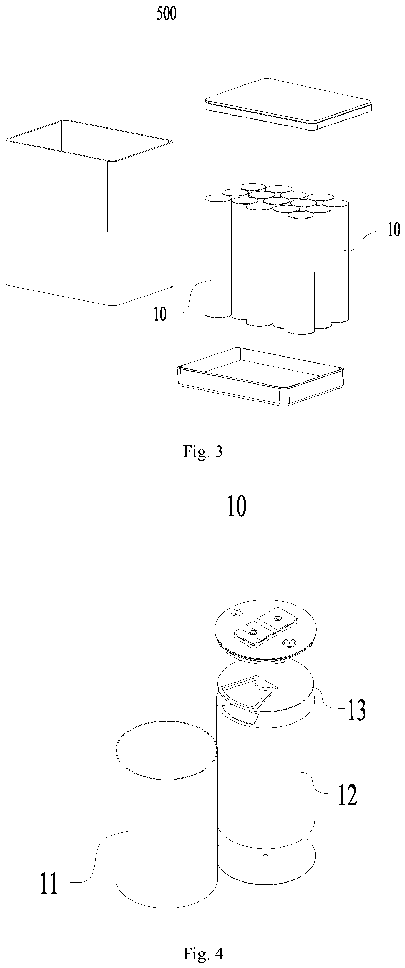

Fig. 3 is a schematic explosive view of the battery module 500 as shown in Fig. 2.

In some embodiments, as shown in Fig. 3, there are a plurality of battery cells 10, and the plurality of battery cells 10 are connected in series or in parallel or in the mixed manner to form battery modules 500 at first. Then a plurality of battery modules 500 are connected in series or in parallel or in the mixed manner to form an entirety and are accommodated in the case.

The structure of the battery cell 10 will be explained in details with reference to the drawings.

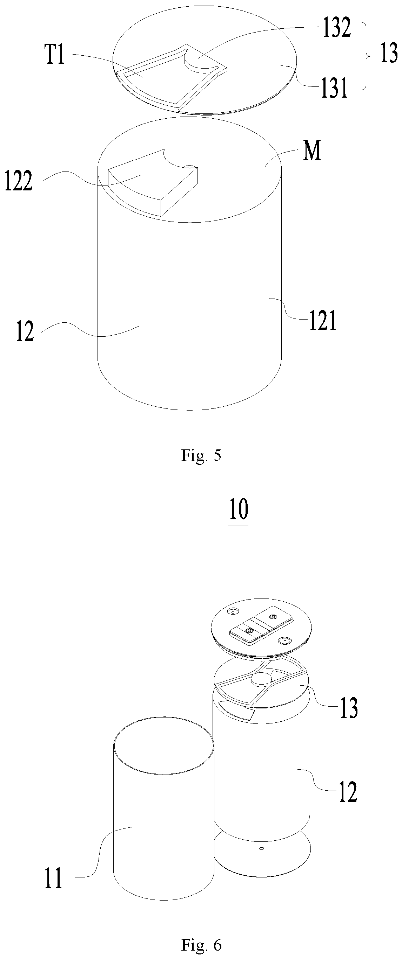

Referring to Figs. 4 and 5, the embodiments of the application provide a battery cell 10 including a housing 11, an electrode assembly 12 and a protection member 13. The electrode assembly 12 is accommodated in the housing 11. The electrode assembly 12 includes a body portion 121 and a first electrode tab portion 122 protruding from an end surface M of the body portion 121. The protection member 13 is disposed in the housing 11 and covers at least a part of the end surface M, the protection member 13 is provided with a first through hole T 1, and at least a part of the first electrode tab portion 122 is accommodated in the first through hole T1.

The housing 11 may be of various shapes and dimensions. In particular, the shape of the housing 11 may be determined according to the specific shape and dimension of the components inside the housing 11. And the housing 11 may be of various materials, such as copper, iron, aluminum, stainless steel, aluminum alloy and the like, on which the embodiments of the application make no specific limitations.

The electrode assembly 12 is disposed inside the housing 11. For example, the shape of the housing 11 may be determined according to the specific shape of the electrode assembly 12. For example, if the electrode assembly 12 is of a cylindrical structure, the housing 11 may be selected to be cylindrical; if the electrode assembly 12 is of a cuboid structure, the housing 11 may be selected to be cuboid.

The body portion 121 may include a portion of the positive electrode sheet coated with the active material layer, a portion of the negative electrode sheet coated with the active material layer, and a separator. The active material in the active material layer is used for an electrochemical reaction with electrolyte solution or the like to generate a charge-discharge process.

The electrode assembly 12 includes a body portion 121 and a first electrode tab portion 122 protruding from the end surface M of the body portion 121. The term "protrude" mentioned in the embodiments of the application means: the first electrode tab portion 122 is at least partially located outside the body portion 121. The embodiments of the application do not limit the connection relationship between the first electrode tab portion 122 and the body portion 121.

The end surface M of the body portion 121 is the surface of the body portion 121 close to the first electrode tab portion 122. The end surface M may be a planar structure or may also have height differences at different positions, which is not limited by the embodiments of the application.

During the flattening process of the first electrode tab portion 122, substances such as metal particles will be generated. In related technologies, the metal particles may fall onto the end surface M and infiltrate into the interior of the body portion 121, thereby resulting in short circuit and other issues of the battery cell 10 during use.

In the embodiments of the application, the protection member 13 can reduce the risk of metal particles entering the interior of the body portion 121. Specifically, the protection member 13 is provided with a first through hole T1, and the protection member 13 can be sleeved outside the first electrode tab portion 122 through the first through hole T1. And the protection member 13 covers at least a part of the structure of the end surface M. During the flattening process of the first electrode tab portion 122, the metal particles falling onto the end surface M will be blocked by the protection member 13, that is, the protection member 13 can reduce the amount of metal particles falling onto the end surface M, further reduce the amount of metal particles entering the interior of the body portion 121, and reduce the risk of short circuit of the battery cell 10, and improve the use safety of the battery cell 10.

The embodiments of the application do not limit the dimension and shape of the protection member 13. For example, the outer contour of the protection member 13 may be the same as the contour of the end surface M, so that the protection member 13 can cover most positions in the end surface M. The embodiments of the application do not limit the material of the protection member 13. For example, the protection member 13 may adopt an insulating material so as to reduce the risk of electric leakage of the battery cell 10.

Furthermore, the embodiments of the application do not limit the shape of the first through hole T1 either. For example, the contour of the first through hole T1 is the same as the contour of the first electrode tab portion 122, so that during the mounting process of the protection member 13, the two can be adaptive to each other. And the embodiments of the application do not limit the dimension of the first through hole T1. That is, the depth of the first through hole T1 may be greater than the thickness of the first electrode tab portion 122, or may also be less than or equal to the thickness of the first electrode tab portion 122.

The embodiments of the application, by providing the protection member 13 on the end surface M, can reduce the amount of metal particles falling onto the end surface M, reduce the amount of metal particles entering the interior of the body portion 121, reduce the risk of short circuit of the battery cell 10, and improve the use safety of the battery cell 10 during the flattening process of the first electrode tab portion 122.

It should be noted that there may be one or more first electrode tabs in the first electrode tab portion 122. When there are a plurality of first electrode tabs, the plurality of first electrode tabs may be led out by a plurality of positive electrode sheets or a plurality of negative electrode sheets, or may also be led out from a plurality of positions of one positive electrode sheet or one negative electrode sheet, which is not limited by the embodiments of the application.

Furthermore, the electrode assembly 12 may also include a second electrode tab portion 123 in addition to the first electrode tab portion 122. The embodiments of the application do not limit the position relationship of the second electrode tab portion 123 relative to the first electrode tab portion 122. For example, the second electrode tab portion 123 may be disposed on the end surface M, i.e., located on the same side of the body portion 121 as the first electrode tab portion 122; or the second electrode tab portion 123 may also be disposed on the side of the body portion 121 away from the first electrode tab portion 122.

In some embodiments, as shown in Fig. 5, the protection member 13 includes a base plate 131 and an electrode tab limit portion 132. The base plate 131 abuts with the end surface M. The first through hole T1 penetrates the base plate 131. The electrode tab limit portion 132 protrudes from the surface of the base plate 131 and is arranged around the first through hole T 1.

The base plate 131 is the main portion of the protection member 13, and the base plate 131 contacts with the end surface M. The dimension of the base plate 131 determines the cover range of the protection member 13 on the end surface M. For example, the outer contour of the orthogonal projection of the base plate 131 onto the end surface M covers the outer contour of the end surface M.

The electrode tab limit portion 132 is located on a side of the base plate 131 in the thickness direction. Here the electrode tab limit portion 132 may be located on the side of the base plate 131 facing towards the end surface M, or the electrode tab limit portion 132 may also be located on the side of the base plate 131 away from the end surface M, which is not limited by the embodiments of the application.

The first through hole T1 penetrates the base plate 131, and the electrode tab limit portion 132 is located around the first through hole T1. Here the electrode tab limit portion 132 may be located only lateral to the first through hole T1, or may also be arranged to encircle the first through hole T1. At the same time, the embodiments of the application do not limit the shape and dimension of the base plate 131 and the electrode tab limit portion 132. For example, the contour shape of the base plate 131 is the same as the contour shape of the end surface M, and the contour shape of at least a part of the structure in the electrode tab limit portion 132 is the same as the contour shape of the first through hole T 1.

In addition, the embodiments of the application do not limit the material and connection relationship of the base plate 131 and the electrode tab limit portion 132 either. The base plate 131 and the electrode tab limit portion 132 may be made of the same material or may also be made of different materials. The base plate 131 and the electrode tab limit portion 132 may be connected and fixed in a way of threaded connection, bonding or welding or the like, or the two may also be formed in an integrated manner.

The presence of the electrode tab limit portion 132 can limit the thickness of the first electrode tab portion 122 to a certain extent during the flattening process of the first electrode tab portion 122. In particular, during the flattening process of the first electrode tab portion 122, the thickness of the first electrode tab portion 122 gradually decreases, and the protection member 13 located around the first through hole T1 will hinder the deformation of the first electrode tab portion 122. On this basis, due to the presence of the electrode tab limit portion 132, the thickness of the protection member 13 around the first through hole T1 increases, which increases its deformation obstruction effect on the first electrode tab portion 122, so as to prevent the thickness of the first electrode tab portion 122 from being too small. It should be noted that the thickness of the first electrode tab portion 122 after flattening may be the same as the sum of thicknesses of the base plate 131 and the electrode tab limit portion 132, or may also be greater or less than the sum of thicknesses of the base plate 131 and the electrode tab limit portion 132.

In the embodiments of the application, the protection member 13 includes the base plate 131 and the electrode tab limit portion 132 respectively, and the base plate 131 mainly functions to reduce the amount of metal particles falling onto the end surface M so as to improve the safety performance of the battery. The electrode tab limit portion 132 mainly functions to limit the thickness of the first electrode tab portion 122 so as to ensure that the structure of the electrode assembly 12 is reliable.

In some embodiments, the electrode tab limit portion 132 includes a reinforcement rib arranged annularly around the first through hole T1.

The reinforcement rib can enhance the structural strength of the protection member 13 at the corresponding position and reduce the risk of deformation. During the flattening process of the first electrode tab portion 122, the influence on the structure at the position around the first through hole T1 is the largest.

On this basis, the embodiments of the application arranging the reinforcement rib around the first through hole T1, so that all the structure of the protection member 13 around the first through hole T1 can have a certain deformation resistance so as to reduce the risk of the protection member 13 deforming while preventing the thickness of the first electrode tab portion 122 from being too small.

In some embodiments, the electrode tab limit portion 132 protrudes from the surface of the base plate 131 away from the end surface M.

In the embodiments of the application, the electrode tab limit portion 132 is located on the side of the base plate 131 away from the end surface M. This design allows all the structure at various positions in the base plate 131 to contact with the end surface M, so as to improve the reliability of coordination between the protection member 13 and the electrode assembly 12.

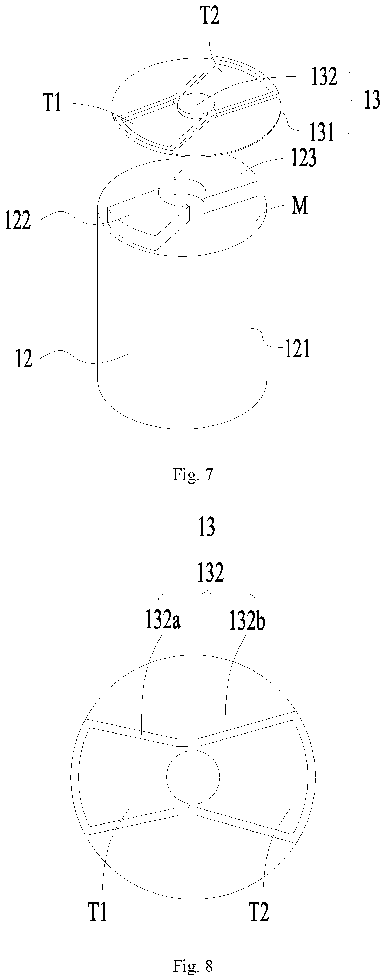

In some embodiments, referring to Figs. 6 and 7, the electrode assembly 12 includes a second electrode tab portion 123 protruding from the end surface M, the protection member 13 is provided with a second through hole T2, and at least a part of the second electrode tab portion 123 is accommodated in the second through hole T2.

The first electrode tab portion 122 and the second electrode tab portion 123 are both disposed on the end surface M, that is, the two are located on the same side of the body portion 121. The embodiments of the application do not limit the shape of the first electrode tab portion 122 and the second electrode tab portion 123 and their relative position on the end surface M. For example, the first electrode tab portion 122 and the second electrode tab portion 123 are symmetrically distributed on the end surface M.

It should be noted that the first electrode tab portion 122 and the second electrode tab portion 123 may have the same polarity or may have different polarities. When the first electrode tab portion 122 and the second electrode tab portion 123 have the same polarity, the first electrode tab portion 122 and the second electrode tab portion 123 are used together to form one of the positive electrode tab and the negative electrode tab. When the the first electrode tab portion 122 and the second electrode tab portion 123 have different polarities, one of the first electrode tab portion 122 and the second electrode tab portion 123 is the positive electrode tab, and the other is the negative electrode tab.

The protection member 13 is provided with a second through hole T2. The function of the second through hole T2 is similar to the function of the first through hole T1. The second through hole T2 is used to accommodate the second electrode tab portion 123, where the thickness of the second electrode tab portion 123 may be greater than, less than, or even equal to the thickness of the second through hole T2. Optionally, the second through hole T2 penetrates through the electrode tab limit portion 132 and the base plate 131, and a part of the structure in the electrode tab limit portion 132 can function to limit the thickness of the second electrode tab limit portion 132.

Similar to the first electrode tab portion 122, during the flattening process of the second electrode tab portion 123, substances such as metal particles will also be generated. Since the second electrode tab portion 123 is also disposed on the end surface M, the metal particles generated by the second electrode tab portion 123 will also fall onto the protection member 13. The protection member 13 can block the metal particles generated by the second electrode tab portion 123, further reduce the amount of metal particles entering the interior of the body portion 121 and improve the use safety of the battery cell 10.

In the embodiments of the application, since both the first electrode tab portion 122 and the second electrode tab portion 123 are disposed on the end surface M, a single protection member 13 can simultaneously block the metal particles resulting from the first electrode tab portion 122 and the metal particles resulting from the second electrode tab portion 123, so as to further reduce the risk of short circuit in the electrode assembly 12 and improve safety.

In some embodiments, the polarity of the first electrode tab portion 122 is opposite to the polarity of the second electrode tab portion 123. One of the first electrode tab portion 122 and the second electrode tab portion 123 serves as the positive electrode tab, and the other serves as the negative electrode tab.

In the embodiments of the application, the first electrode tab portion 122 and the second electrode tab portion 123 with opposite polarities are both located on the same side of the body portion 121, which can reduce the occupation of the internal space of the housing 11 by the electrode assembly 12. At the same time, a single protection member 13 can simultaneously function to block the metal particles generated by the positive and negative electrode tabs, without the need to provide further protection members 13 on the side of the body portion 121 away from the first electrode tab portion 122, so as to further reduce the overall dimension and weight of the battery cell 10, which is conducive to meeting the requirement of portability and the like.

In some embodiments, referring to Figs. 6 to 8, the electrode tab limit portion 132 includes a first limit portion 132a and a second limit portion 132b, the first limit portion 132a is arranged around a peripheral side of the first electrode tab portion 122, and the second limit portion 132b is arranged around a peripheral side of the second electrode tab portion 123.

The first limit portion 132a is arranged on the outer periphery of the first electrode tab portion 122, and the first through hole T1 is arranged to penetrate the first limit portion 132a. The embodiments of the application do not limit the shape contour of the first limit portion 132a. For example, the first limit portion 132a may be of a closed-loop structure and be arranged to encircle the first electrode tab portion 122; or the first limit portion 132a may also be of an arc-shaped structure and be arranged corresponding to a part of the outer periphery in the first electrode tab portion 122.

The second limit portion 132b is arranged on the outer periphery of the second electrode tab portion 123, and the second through hole T2 is arranged to penetrate the second limit portion 132b. The embodiments of the application do not limit the shape contour of the second limit portion 132b. For example, the second limit portion 132b may be of a closed-loop structure and be arranged to encircle the second electrode tab portion 123;or the second limit portion 132b may also be of an arc-shaped structure and be arranged corresponding to a part of the outer periphery in the second electrode tab portion 123.

The first limit portion 132a can limit the thickness of the first electrode tab portion 122, and the second limit portion 132b can limit the thickness of the second electrode tab portion 123. Here the thickness of the first limit portion 132a and the thickness of the second limit portion 132b may be the same or may also be different, and the first limit portion 132a and the second limit portion 132b may be connected integrally or may also be provided independently of each other.

In the embodiments of the application, the electrode tab limit portion 132 includes a first limit portion 132a and a second limit portion 132b, and the first limit portion 132a and the second limit portion 132b limit the thickness of the first electrode tab portion 122 and of the second electrode tab portion 123 respectively. On this basis, it is possible to design the dimension and shape of the first limit portion 132a and of the second limit portion 132b according to the dimension and shape of the first electrode tab portion 122 and of the second electrode tab portion 123 respectively, so as to make them better meet the product requirements and have a relatively high flexibility.

In some embodiments, as shown in Fig. 8, the first limit portion 132a and the second limit portion 132b are connected to each other to form an integral structure.

The first limit portion 132a and the second limit portion 132b may be connected integrally in a way of bonding or welding or the like, or the two may be made of the same material, so that during the production process of the electrode tab limit portion 132, the first limit portion 132a and the second limit portion 132b can be formed integrally through cutting process and the like.

In the embodiments of the application, the first limit portion 132a and the second limit portion 132b are both connected to the base plate 131, and the two are integrally connected. This design can improve the structural strength of the first limit portion 132a and of the second limit portion 132b simultaneously. During use of the battery cell, the impact resistance of the first limit portion 132a and the second limit portion 132b can be improved, the risk of deformation thereof can be reduced, and the service life of the battery cell can be increased.

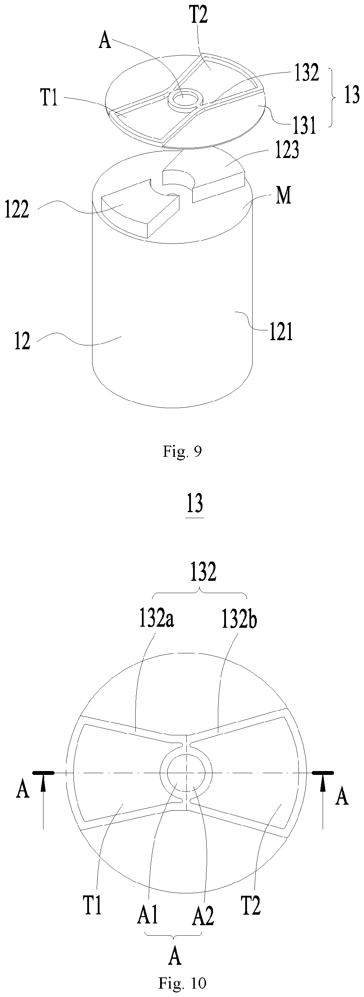

In some embodiments, referring to Figs. 9 and 10, the surface of the electrode tab limit portion 132 away from the base plate 131 is recessed to form a recess A.

The recess A is formed by the surface of the electrode tab limit portion 132 away from the end surface M being recessed in the direction close to the end surface M. The recessed direction may be perpendicular to the base plate 131 or may also have a certain angle with the direction perpendicular to the base plate 131, which is not limited by the embodiment of the application. And the embodiment of the application do not limit the recessed depth. The recess A may only penetrate a part of the electrode tab limit portion 132, or may also completely penetrate the electrode tab limit portion 132, or may even penetrate a part of the base plate 131.

In addition, the embodiment of the application do not limit the relative position of the recess A on the electrode tab limit portion 132. The recess A may be disposed in the first limit portion 132a, or may be disposed in the second limit portion 132b, or may also be disposed in the first limit portion 132a and the second limit portion 132b simultaneously.

It should be noted that although the recess A is formed by being recessed, the recess A will not completely penetrate the protection member 13, that is, at least a part of the structure in the protection member 13 is located between the recess A and the end surface M, so as to reduce the amount of metal particles falling onto the end surface M during the flattening process of the first electrode tab portion 122 and the second electrode tab portion 123, and improve the use safety of the battery cell.

The presence of the recess A can reduce the preparation difficulty of the battery cell. In particular, during the preparation of the battery cell, it is required to mount the protection member 13 and the electrode assembly 12, which are in coordination, into the housing 11 at first, and then to press and close the housing 11 and keep it sealed. When pressing, it is required to compress the electrode assembly 12 and the protection member 13 so as to ensure that the relative position of the electrode assembly 12 and the protection member 13 in the formed battery cell remain fixed.

Since the electrode tab limit portion 132 is arranged to protrude from the base plate 131 in the protection member 13, during the pressing process, the presence of the electrode tab limit portion 132 results in that a greater pressure is required to achieve the pressing operation. The greater pressure may easily lead to a rigid contact between the electrode assembly 12 and the housing 11 or between the electrode assembly 12 and the protection member 13, resulting in a risk of damage, which is not conducive to the yield of the product.

On this basis, the embodiments of the application provide a recess A on the electrode tab limit portion 132, and the presence of the recess A can reduce the influence of the electrode tab limit portion 132 on the pressing process, so that the pressure required during the pressing process can be reduced, so as to reduce the risk of rigid contact of the electrode assembly 12 with other structures, thereby improving the product yield while reducing the preparation difficulty.

In some embodiments, the recess A includes a first groove A1 formed by being recessed from the surface of the first limit portion 132a away from the base plate 131 and a second groove A2 formed by being recessed from the surface of the second limit portion 132b away from the base plate 131, and the first groove A1 is in communication with the second groove A2.

The recess A includes a first groove A1 and a second groove A2, the first groove A1 is disposed at the first limit portion 132a, and the second groove A2 is disposed at the second limit portion 132b. The depth of the first groove A1 may be the same as or different from the depth of the second groove A2. The first groove A1 is in communication with the second groove A2, indicating that the first groove A1 is located at the end of the first limit portion 132a close to the second limit portion 132b, the second groove A2 is located at the end of the second limit portion 132b close to the first limit portion 132a, and the first groove A1 and the second groove A2 are interposed between the first through hole T1 and the second through hole T2.

The embodiments of the application do not limit the shape and dimension of the first groove A1 and the second groove A2. Optionally, the first groove A1 and the second groove A2 are symmetrically arranged. The cross sections of the first groove A1 and the second groove A2 are both of a semi-circular structure, and the recess A formed by communicating the two is of a circular structure.

The recess A in the embodiments of the application is disposed simultaneously in the first limit portion 132a and the second limit portion 132b, that is, a part of the structure in the first limit portion 132a and a part of the structure in the second limit portion 132b are both required to be dug out. This can ensure that the strength of the two is similar, reduce the risk of uneven stress at different positions on the electrode assembly 12 resulting from that one of the first limit portion 132a and the second limit portion 132b is subjected to too much pressure and the other is subjected to too little pressure during the pressing process. The reliability is improved while the difficulty of preparation of the battery cell is reduced.

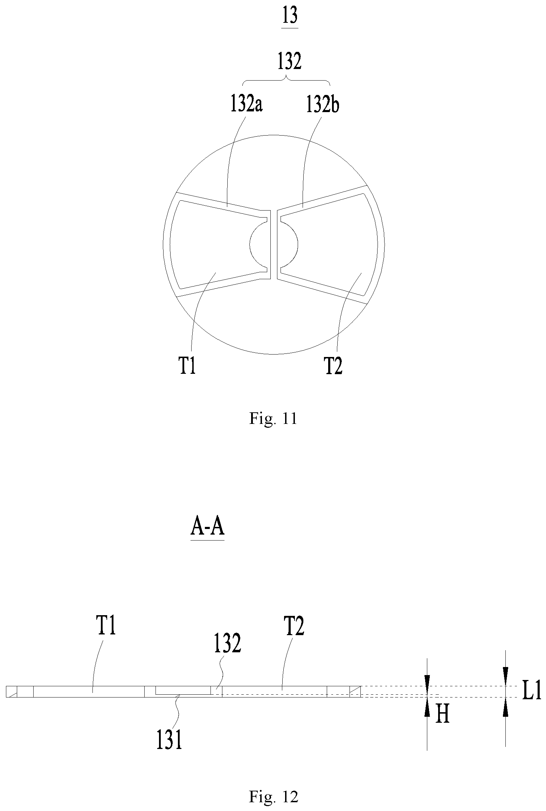

In some embodiments, referring to Fig. 11, the first limit portion 132a and the second limit portion 132b are arranged to be spaced apart.

In the embodiments of the application, the first limit portion 132a and the second limit portion 132b are two independent structures, which are arranged to be spaced apart in the direction from the first through hole T1 towards the second through hole T2. The spacer region interposed between the first limit portion 132a and the second limit portion 132b can reduce the strength of the electrode tab limit portion 132 to a certain extent, so as to reduce the pressure required for pressing and reduce the difficulty of preparation of the battery cell.

In some optional embodiments, the first limit portion 132a and the second limit portion 132b are symmetrically distributed.

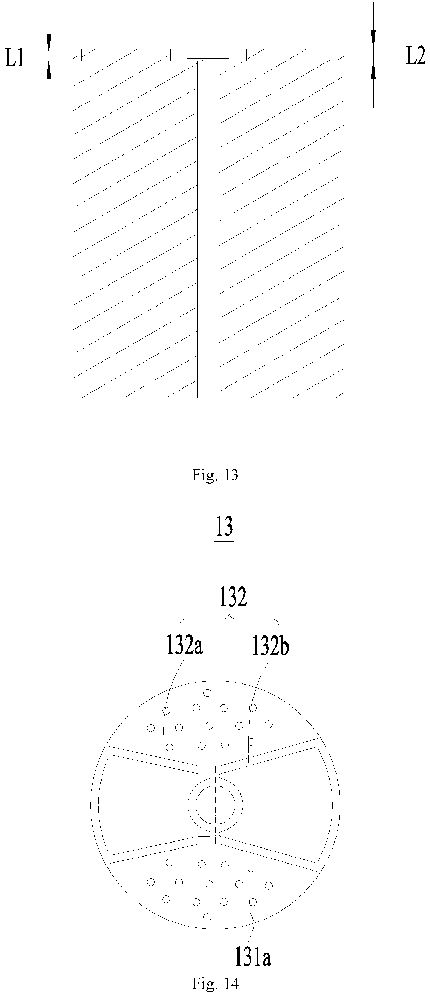

In some embodiments, referring to Figs. 12 and 13, the thickness sum L1 of the base plate 131 and the electrode tab limit portion 132 is not greater than the thickness L2 of the first electrode tab portion 122.

The thicknesses sum of the base plate 131 and the electrode tab limit portion 132 is the depth of the first through hole T1. As can be seen from the above content, the presence of the electrode tab limit portion 132 can limit the thickness of the first electrode tab portion 122, so as to prevent the thickness of the first electrode tab portion 122 from being too small.

On this basis, the embodiments of the application design the thickness sum of the base plate 131 and electrode tab limit portion 132 according to the required thickness of the first electrode tab portion 122, so as to ensure that the thickness of the flattened first electrode tab portion 122 is always greater than or equal to the thickness sum of the base plate 131 and electrode tab limit portion 132. Thus, during the process of flattening the first electrode tab portion 122 to the required thickness, the influence of the electrode tab limit portion 132 on the flattening process is reduced. And after the first electrode tab portion 122 is flattened to the required thickness, the electrode tab limit portion 132 can hinder the reduction of the thickness of the first electrode tab portion 122, so as to ensure that the structure of the flattened first electrode tab portion 122 is reliable. Further optionally, the thickness sum of the base plate 131 and the electrode tab limit portion 132 is not greater than the thickness of the second electrode tab portion 123.

In some embodiments, referring to Fig. 12, the thickness of the base plate 131 is H, and H satisfies: 0.1mm≤H≤1.5mm. For example, H is one of 0.1mm, 0.5mm, 0.75mm, 1mm and 1.5mm.

If the thickness of base plate 131 is too small, the structural strength of base plate 131 is insufficient, which is prone to deformation and other risks, and cannot meet the mounting requirements of the electrode tab limit portion 132. If the thickness of the base plate 131 is too large, a greater pressure is required during the pressing process, which is not conducive to the preparation of the battery cell 10, and the electrode assembly 12 is prone to damage.

On this basis, the embodiments of the application set the thickness of the base plate 131 between 0.1mm and 1.5mm, the influence of the base plate 131 on the pressing stress is reduced and the difficulty of preparation of the battery cell 10 is reduced while the structural strength of the base plate 131 is satisfied.

In some embodiments, referring to Fig. 14 the base plate 131 is further provided with a plurality of penetration holes 131a spaced apart from each other.

The penetration holes 131a penetrate the base plate 131 in the thickness direction of the base plate 131, the electrolyte solution can be injected through the penetration holes 131a to the position where the electrode assembly 12 is located inside the housing 11. By disposing the penetration holes 131a, it is possible to reduce the injection pressure of the electrolyte solution, so as to reduce the difficulty of injection, which is conducive to the preparation of the battery cell.

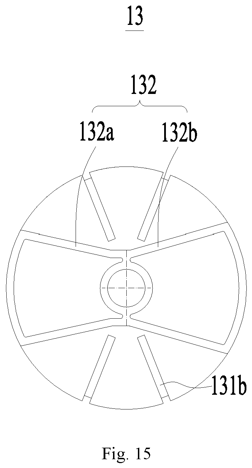

In some embodiments, referring to Fig. 15, the surface of the base plate 131 away from the end surface M is further provided with a flow guide groove 131b, and at least one end of the flow guide groove 131b penetrates the side wall of the base plate 131.

The flow guide groove 131b is used to guide the electrolyte solution and assist in better injecting the electrolyte solution to the position where the electrode assembly 12 is located inside the housing 11. For example, the flow guide groove 131b may extend in the radial direction of the base plate 131 from the center position of the base plate 131 to the side wall position of the base plate 131, so as to penetrate the side wall of the base plate 131 in the thickness direction of the base plate 131, so as to form a passage for the electrolyte solution to enter the electrode assembly 12.

In some optional embodiments, the flow guide groove 131b is of an inclined structure, and the closer to the side wall of the base plate 131, the lower the height of the flow guide groove 131b is. This design can make it easier for the electrolyte solution to flow into the position of the electrode assembly 12, which is conducive to the preparation of the battery cell.

In some embodiments, the protection member 13 is an elastic insulating member.

Usually, during the pressing process, the housing 11 compresses the protection member 13 at first, and then the pressure is transmitted to the electrode assembly 12 and causes the electrode assembly 12 to be compressed together. If the protection member 13 itself is of a rigid structure (that is, under the action of an external force, the deformation amount of the protection member 13 is relatively small), then most of the pressure will be transmitted to the electrode assembly 12, so that the side of the body portion 121 away from the protection member 13 in the electrode assembly 12 will make a rigid contact with the housing 11, thereby posing a risk of decarburization.

Thus, the embodiments of the application embody the protection member 13 as an elastic structure, that is, at least a part of the structure in the protection member 13 can deform elastically under a pressure and absorb most of the pressure. In this way, the pressure transmitted to the electrode assembly 12 is reduced, the risk of damage to the electrode assembly 12 is reduced, and the yield of the battery cell 10 is improved.

It should be noted that the protection member 13 may be elastic in its entirety, or only a part of the structure in the protection member 13 may be elastic, which is not limited by the embodiments of the application.

In a second aspect, the embodiments of the application provide a battery including the battery cell 10 in any of the aforesaid implementations.

It should be noted that the battery provided by the embodiments of the application has the beneficial effects of the battery cell 10 in any of the aforementioned implementations. For specific details, please refer to the above description of the beneficial effects of the battery cell 10, and the embodiments of the application are not repeated here.

In a third aspect, the embodiments of the application provide an electric device including the battery cell 10 in any of the aforesaid implementations used to provide electrical energy.

According to some embodiments of the application, referring to Figs. 6, 9 and 10, the battery cell 10 includes a housing 11, an electrode assembly 12 and a protection member 13. The electrode assembly 12 is accommodated in the housing 11. The electrode assembly 12 includes a body portion 121 and a first electrode tab portion 122 and a second electrode tab portion 123 which protrude from the end surface M of the body portion 121. The polarity of the first electrode tab portion 122 is opposite to the polarity of the second electrode tab portion 123.

The protection member 13 is disposed in the housing 11 and covers at least a part of the end surface M. The protection member 13 is elastic and includes a base plate 131 and a electrode tab limit portion 132. The electrode tab limit portion 132 protrudes from the surface of the base plate 131 away from the end surface M. The base plate 131 abuts with the end surface M. The electrode tab limit portion 132 includes a first limit portion 132a and a second limit portion 132b, and at least a part of the first electrode tab portion 122 is accommodated in the first through hole T1. A second through hole T2 penetrates the second electrode tab portion 123 and the base plate 131, and at least a part of the second electrode tab portion 123 is accommodated in the second through hole T2.

The protection member 13 further includes a recess A. The recess A includes a first groove A1 formed by being recessed from the surface of the first limit portion 132a away from the base plate 131 and a second groove A2 formed by being recessed from the surface of the second limit portion 132b away from the base plate 131, and the first groove A1 is in communication with the second groove A2.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A battery cell, comprising:
a housing;
an electrode assembly accommodated in the housing, the electrode assembly comprising a body portion and a first electrode tab portion protruding from an end surface of the body portion; and
a protection member disposed in the housing and covering at least a part of the end surface, the protection member provided with a first through hole, at least a part of the first electrode tab portion accommodated in the first through hole.

2. The battery cell according to claim 1, wherein the protection member comprises:
a base plate abutting with the end surface, the first through hole penetrating the base plate;
an electrode tab limit portion protruding from a surface of the base plate and arranged around the first through hole.

3. The battery cell according to claim 2, wherein the electrode tab limit portion comprises a reinforcement rib arranged annularly around the first through hole.

4. The battery cell according to claim 2, wherein the electrode tab limit portion protrudes from a surface of the base plate away from the end surface.

5. The battery cell according to claim 2, wherein the electrode assembly further comprises a second electrode tab portion protruding from the end surface, the protection member is provided with a second through hole, and at least a part of the second electrode tab portion is accommodated in the second through hole.

6. The battery cell according to claim 5, wherein a polarity of the second electrode tab portion is opposite to a polarity of the first electrode tab portion.

7. The battery cell according to claim 5 or 6, wherein the electrode tab limit portion comprises a first limit portion and a second limit portion, the first limit portion is arranged around a peripheral side of the first electrode tab portion, and the second limit portion is arranged around a peripheral side of the second electrode tab portion.

8. The battery cell according to claim 7, wherein the first limit portion and the second limit portion are connected to each other to form an integral structure.

9. The battery cell according to claim 7, wherein the surface of the electrode tab limit portion away from the base plate is recessed to form a recess.

10. The battery cell according to claim 7, wherein the recess comprises:
a first groove formed by being recessed from a surface of the first limit portion away from the base plate; and
a second groove formed by being recessed from a surface of the second limit portion away from the base plate, the first groove in communication with the second groove.

11. The battery cell according to claim 7, wherein the first limit portion and the second limit portion are arranged to be spaced apart.

12. The battery cell according to any one of claims 2-11, wherein a thickness sum of the base plate and the electrode tab limit portion is not greater than a thickness of the first electrode tab portion.

13. The battery cell according to any one of claims 2-11, wherein the base plate is further provided with a plurality of penetration holes spaced apart from each other.

14. The battery cell according to any one of claims 2-11, wherein the surface of the base plate away from the end surface is further provided with a flow guide groove, and at least one end of the flow guide groove penetrates a side wall of the base plate.

15. The battery cell according to any one of claims 1-11, wherein the protection member is an elastic insulating member.

16. A battery, comprising the battery cell according to any one of claims 1-15.

17. An electric device, comprising the battery cell according to any one of claims 1-15 used to provide electrical energy.
